# EUROPÄISCHE PATENTSCHRIFT

(11) **EP 1 779 705 B1**
(45) Veröffentlichungstag und Bekanntmachung des Hinweises auf die Patenterteilung: **05.03.2008**
(21) Anmeldenummer: 05785448.1
(22) Anmeldetag: 11.08.2005
(51) Int. Cl.: H05B 7/20

(54) **VERFAHREN UND VORRICHTUNG ZUM BETRIEB EINES ELEKTROLICHTBOGENOFENS**
METHOD AND DEVICE FOR OPERATING AN ELECTRIC-ARC FURNACE
PROCEDE ET DISPOSITIF POUR FAIRE FONCTIONNER UN FOUR A ARC ELECTRIQUE

(30) Priorität: 20.08.2004 DE 102004040494
(43) Veröffentlichungstag der Anmeldung: 02.05.2007
(73) Patentinhaber: SIEMENS AKTIENGESELLSCHAFT, 80333 München (DE)
(72) Erfinder: MATSCHULLAT, Thomas, 90542 Eckental (DE); STÜRMER, Uwe, 91083 Baiersdorf (DE)
(86) Internationale Anmeldenummer: PCT/EP2005/053959
(87) Internationale Veröffentlichungsnummer: WO 2006/021515

(56) Entgegenhaltungen:
- US-A- 4 263 468
- US-A- 4 564 388
- US-A- 4 689 800
- US-A- 5 060 914
- US-A- 5 800 591

## Beschreibung

Die Erfindung betrifft ein Verfahren zum Betrieb eines Elektrolichtbogenofens. Des Weiteren betrifft die Erfindung eine entsprechende Vorrichtung.

In einem Elektrolichtbogenofen werden insbesondere Eisen enthaltende Einsatzstoffe geschmolzen und/oder behandelt. Elektrische Energie dient im Elektrolichtbogenofen vorzugsweise zum Erwärmen, Schmelzen und Überhitzen und/oder Reinigen der Einsatzstoffe. In Elektrolichtbogenöfen wird Wärme durch Lichtbögen, d.h. elektrischer Strom, der zwischen Elektroden oder zwischen einer oder mehreren Elektroden und Ofenbestandteilen fließt, erzeugt, wobei die Lichtbögen ihre Energie an die zu erschmelzenden Einsatzstoffe bzw. an die Schmelze im Lichtbogenofen abgeben.

In "Stahlerzeugung im Lichtbogenofen" von Manfred Jellinghaus, 1994, Verlag Stahleisen mbH, Düsseldorf, wird die Stahlerzeugung im Lichtbogenofen beschrieben. Insbesondere auf den Seiten 100 und 101 der vorgenannten Druckschrift wird auf die Betriebsweise von Elektrolichtbogenöfen näher eingegangen. Um eine möglichst hohe Produktivität bei einem Elektrolichtbogenofen zu erreichen, wird versucht, möglichst schnell einzuschmelzen, während der gesamten Einschmelzzeit die größtmögliche elektrische Energie zuzuführen und Abschalt- oder Zwischenzeiten ohne Energiezufuhr so kurz wie möglich zu halten. Um die Produktivität von Lichtbogenöfen zu steigern, wird beispielsweise vorgeschlagen, stärkere Ofentransformatoren zu verwenden oder den Materialfluss aller Rohstoffe zum Elektrolichtbogenofen besser zu organisieren.

US 4,564,388 bezieht sich auf eine kontinuierliche Betriebsweise eines Elektrolichtbogenofens. Bei dem hier offenbarten Verfahren wird der Elektrode des Elektrolichtbogenofens dauerhaft Energie zugeführt sowie dem Ofen kontinuierlich neue Einsatzstoffe zugegeben. In periodischen Zeitabständen wird ein Abstichverfahrensschritt zum Entnehmen von Schmelzgut durchgeführt. Die dauerhafte Betriebsweise der Elektrode hat zur Folge, dass bei dem in D1 beschriebenen Verfahren der Elektrolichtbogenofen für einen Abstichverfahrensschritt nur um einen maximalen Neigungswinkel von 15° gekippt werden kann und in dem Elektrolichtbogenofen ein Mindestfüllstand des geschmolzenen Schmelzguts aufrechterhalten werden muss, um ein Durchschmelzen der Ofenunterseite und damit eine Beschädigung des Elektrolichtbogenofens zu vermeiden.

US 5,800,591 bezieht sich auf eine Vorrichtung zur Zugabe von Einsatzstoffen in einen Elektrolichtbogenofen. Darüber ist ein kontinuierliches Verfahren zum Betrieb eines Elektrolichtbogenofens offenbart, bei dem der Elektrode des Elektrolichtbogenofens dauerhaft Energie zugeführt wird. Auch findet sich der Hinweis auf einen maximalen Neigungswinkel des Elektrolichtbogenofens von 15° bei einem Abstichverfahrensschritt. Ein ähnliches Verfahren wird auch von US 4,263,468 offenbart. Hingegen zeigt US 4,689,800 A eine diskontinuierliche Betriebsweise eines Elektrolichtbogenofens.

US 5,060,914 A bezieht sich auf ein als "continuous skull nozzle process" bezeichnetes kontinuierliches Schmelzverfahren, mit dessen Hilfe die Aufrechterhaltung einer die innere Oberfläche des Ofens schützenden, als "skull" bezeichneten Schicht kontrolliert werden soll, um einen kontinuierlichen Abfluss von Schmelzgut aus dem Ofen zu gewährleisten.

Die DD 250 136 A5 bezieht sich auf eine kontinuierliche Betriebsweise eines Elektrolichtbogenofens. Bei dem in D1 offenbarten Verfahren wird der Elektrode des Elektrolichtbogenofens dauerhaft Energie zugeführt, sowie dem Ofen kontinuierlich neue Einsatzstoffe zugegeben. In periodischen Zeitabständen wird ein Abstichverfahrensschritt zum Entnehmen von Schmelzgut durchgeführt. Die dauerhafte Energiezufuhr zur Elektrode hat jedoch zur Folge, dass bei dem beschriebenen Verfahren der Elektrolichtbogenofen für einen Abstichverfahrensschritt lediglich um einen Neigungswinkel von maximal 15° gekippt werden kann und in dem Ofen am Ende eines Abstichs ein Mindestfüllstand ("Rückstand") an geschmolzenem Schmelzgut von 40 bis 50% der maximalen Badhöhe aufrecht erhalten werden muss, um ein Durchschmelzen des Ofenbodens bzw. eine Beschädigung des Ofens zu vermeiden.

WO 03/097882 A1 offenbart ein weiteres kontinuierliches Verfahren zum Betrieb eines Elektrolichtbogenofens, bei dem der Elektrode des Ofens dauerhaft zugeführt wird. Auch hier wird für die dauerhafte Energiezufuhr das Einhalten eines Mindestfüllstands am Ende eines Abstichs vorausgesetzt, welcher laut Beschreibungstext 7 bis 13 Abstichvolumen beträgt.

EP 0 895 441 A1 betrifft ein Verfahren zur Regelung der Zufuhr elektrischer Energie bei einem Elektrolichtbogenofen.

US 6,473,446 B2 beschreibt ein weiteres kontinuierliches Verfahren zum Betrieb eines Elektrolichtbogenofens, bei dem der Elektrode des Ofens permanent Energie zugeführt wird. Die kontinuierliche Betriebsweise erfordert analog zu den Lehren obiger Dokumente das Beibehalten eines Mindestfüllstands an Schmelzgut in dem Ofen ("heel"), welcher hier wenigstens 70% des Abstichvolumens bzw. wenigstens dreimal den Durchmesser einer Abstichöffnung betragen soll.

Aus dem Lehrbuch "Elektrostahl-Erzeugung" von Karl-Heinz Heinen, 4. Auflage, Verlag Stahl Eisen GmbH, Düsseldorf, 1997, Seiten 112 bis 127, 305 bis 325, 373 bis 377 und 387 bis 394 handelt es sich um ein Fachbuch zur Elektrostahlerzeugung, welches ausführlich Regelungsverfahren zum Betrieb eines Elektrolichtbogenofens mit einer energetischen Betrachtung als auch einzelne konstruktive Komponenten eines Elektrolichtbogenofens behandelt.

Aufgabe der Erfindung ist es, die Produktivität eines Elektrolichtbogenofens weiter zu verbessern.

Diese Aufgabe wird gelöst durch ein Verfahren zum Betrieb eines Elektrolichtbogenofens, der mindestens eine Elektrode aufweist, wobei in einem Betriebszyklus des Elektrolichtbogenofens, der eine Abfolge aus einer Einschaltzeit, einer Abschaltzeit und einer letzten Einschaltzeit umfasst, ein Abstichverfahrensschritt durchgeführt wird, wobei der mindestens einen Elektrode während der Einschaltzeiten Energie zugeführt und während der Abschaltzeit keine Energie zugeführt wird, wobei der Abstichverfahrensschritt nach der Abschaltzeit durchgeführt wird, und wobei der mindestens einen Elektrode zumindest zeitweise auch während des Abstichverfahrensschritts Energie zugeführt wird.

Im Gegensatz zu bekannten Betriebsweisen eines Elektrolichtbogenofens wird die Energiezufuhr zur mindestens einen Elektrode erfindungsgemäß nicht mehr vor dem Abstichverfahrensschritt abgestellt. Stattdessen wird auch während des Abstichverfahrensschritts zumindest zeitweise weiterhin Energie zugeführt. Derart kann der Abstichverfahrensschritt früher als bei der herkömmlichen Betriebsweise beginnen, was im Vergleich zur herkömmlichen Betriebsweise eines Elektrolichtbogenofens zu einer signifikanten Zeitersparnis führt. Die Produktivität eines Elektrolichtbogenofens wird so gesteigert und die Elektrodenverbräuche verringern sich bedingt durch kürzere Standzeiten.

Mit Vorteil wird der Energieinhalt von sich im Elektrolichtbogenofen befindendem Schmelzgut auch während des Abstichverfahrensschritts gezielt erhöht. Derart wird die Produktivität des Elektrolichtbogenofens weiter gesteigert und es ergibt sich ein insgesamt geringerer Energieverbrauch.

Mit Vorteil wird die Energiezufuhr durch Vorgaben eines Bedieners geregelt. Derart kann das Verfahren mit äußerst geringem vorangehendem Investitionsaufwand durchgeführt werden.

Mit Vorteil wird die Energiezufuhr mittels eines Zählwerks geregelt. Derart müssen insbesondere mit dem Betrieb des Elektrolichtbogenofens zusammenhängende Berechnungen und Auswertungen nicht mehr von einem Bediener ausgeführt werden.

Mit Vorteil wird die Energiezufuhr unter Zuhilfenahme eines in einer Regelungsvorrichtung implementierten Modells zur Energie- und Massenbilanz geregelt. Derart wird ein äußerst schnell reagierendes und weitestgehend automatisches Regelungsverfahren für den Betrieb eines Elektrolichtbogenofens bereitgestellt.

Die der Erfindung zugrunde liegende Aufgabe wird auch gelöst durch eine Vorrichtung zur Durchführung des vorangehend in seinen unterschiedlichen Ausprägungen beschriebenen Verfahrens mit einem Elektrolichtbogenofen und einer mit dem Elektrolichtbogenofen gekoppelten Regelungsvorrichtung, wobei die Regelungsvorrichtung ein Modell zur Energie- und Massenbilanz aufweist und derart ausgebildet ist, dass sie die Position und die Energiezufuhr der mindestens einen Elektrode des Elektrolichtbogenofens auch während des Abstichverfahrensschritts regelt. Vorteile der erfindungsgemäßen Vorrichtung ergeben sich analog zu den Vorteilen des erfindungsgemäßen Verfahrens.

Nachfolgend werden Einzelheiten und weitere Vorteile der Erfindung anhand von Ausführungsbeispielen in Verbindung mit den Zeichnungen näher erläutert. Es zeigen:
- Figur 1: eine beispielhafte, schematische Darstellung eines Elektrolichtbogenofens,
- Figur 2: eine beispielhafte, schematische Darstellung der Energieverteilung während des herkömmlichen Betriebes eines Elektrolichtbogenofens,
- Figur 3: eine beispielhafte, schematische Darstellung der Energieverteilung während des erfindungsgemäßen Betriebes eines Elektrolichtbogenofens.

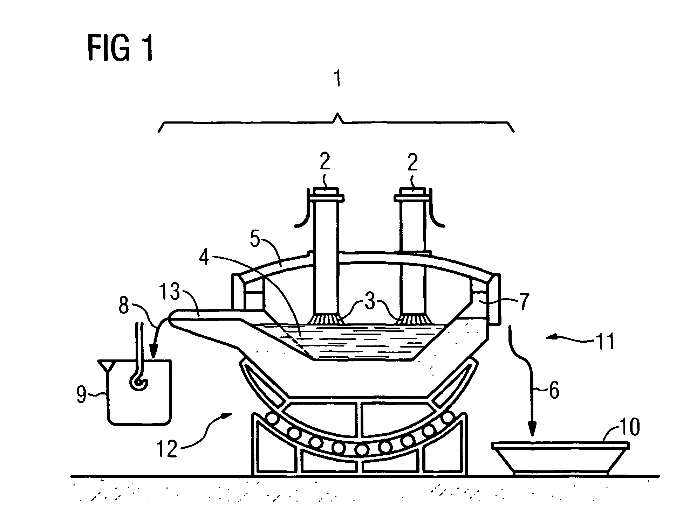

**Figur 1** zeigt ein Bespiel für einen Elektrolichtbogenofen 1 mit einem Ofengefäß 11 und einem Gefäßunterbau 12 mit Ofenwiege. Im gezeigten Beispiel befindet sich ein Deckel 5 im oberen Bereich des Ofengefäßes. Der Deckel 5 ist im gezeigten Beispiel beweglich ausgebildet und kann vorzugsweise geöffnet werden, um beispielsweise Einsatzstoffe in das Ofengefäß 11 zuzuführen.

Im Beispiel ist Schmelzgut 4 gezeigt, das sich im Ofengefäß 11 befindet. Die Bezeichnung "Schmelzgut" 4 wird gebraucht, um sowohl im Elektrolichtbogenofen 1 befindliche Einsatzstoffe als auch geschmolzenes Material zu bezeichnen. Als Schmelzgut 4 wird auch ein Gemisch von Einsatzstoffen und geschmolzenem Material bezeichnet. Einsatzstoffe sind beispielsweise Schrott, d.h. eisenhaltige Abfälle, Roheisen und/oder Eisenschwamm. Dem Schmelzgut 4 werden häufig Zuschläge wie Schlackenbildner, Flussmittel, Frischmittel, Kohlungsmittel, Schlackenreduktionsmittel und/oder Zusätze wie Desoxidations- und Legierungsmittel zugegeben.

Der Elektrolichtbogenofen 1 weist im gezeigten Beispiel mehrere Elektroden 2 auf, die durch Öffnungen des Deckels 5 hindurchgeführt sind. Mit Hilfe der Elektroden 2 und durch Zufuhr von Energie entstehen Lichtbögen 3, mittels derer dem Schmelzgut 4 Energie in Form von Wärme zugeführt wird.

Der Elektrolichtbogenofen 1 kann beispielsweise als Gleichstrom-Lichtbogenofen oder als Wechselstrom-Lichtbogenofen ausgebildet sein. Für den Elektrolichtbogenofen 1 ist vorzugsweise eine in der Zeichnung nicht näher dargestellte Regelungsvorrichtung vorgesehen. Diese Regelungsvorrichtung weist eine Elektrodenregelung auf, um durch Verstellen der Elektroden 2 die Leistungsumsetzungen im Elektrolichtbogenofen 1 in gewünschter Weise einzustellen. Das Zünden der Lichtbögen 3, die Einstellung der Lichtbogenlänge und der Ausgleich des Abbrandes werden im Wesentlichen durch Heben und Senken der Elektroden 2 erreicht. Insbesondere während des Schmelzens von Material im Elektrolichtbogenofen 1 werden die Elektroden 2 weitestgehend so schnell nachgestellt, dass die Lichtbögen 3 nicht abreißen und Kurzschlüsse, die beispielsweise bei Schrotteinstürzen auftreten können, sich durch schnelle Aufwärtsbewegung der Elektroden 2 in kürzester Zeit ausgleichen.

Der Elektrolichtbogenofen 1 weist vorzugsweise eine Tür 7 auf, um Schlacke 6, beispielsweise mittels einer Schlackenpfanne 10, abzuführen.

Am Ende einer Schmelze, im Folgenden auch Betriebszyklus genannt, wird das fertige Schmelzgut 4 aus dem Elektrolichtbogenofen 1 als Rohstahl 8 abgeführt. Das Abführen des fertigen Schmelzgutes 4, d.h. also das Entnehmen von Rohstahl 8 aus dem Elektrolichtbogenofen 1, wird als Abstichverfahrensschritt bezeichnet. Der Rohstahl 8 wird über den so genannten Abstich 13, der im gezeigten Beispiel als Syphonabstich ausgebildet ist, aus dem Elektrolichtbogenofen 1 in eine Pfanne 9 gegeben. Vorzugsweise wird das Ofengefäß 11 dazu gekippt. Mit Hilfe der Pfanne 9, die auch als Gießpfanne bezeichnet wird, kann der Rohstahl 8 nach dem Abstichverfahrensschritt einer Gießvorrichtung, beispielsweise einer Stranggießanlage, zugeführt werden.

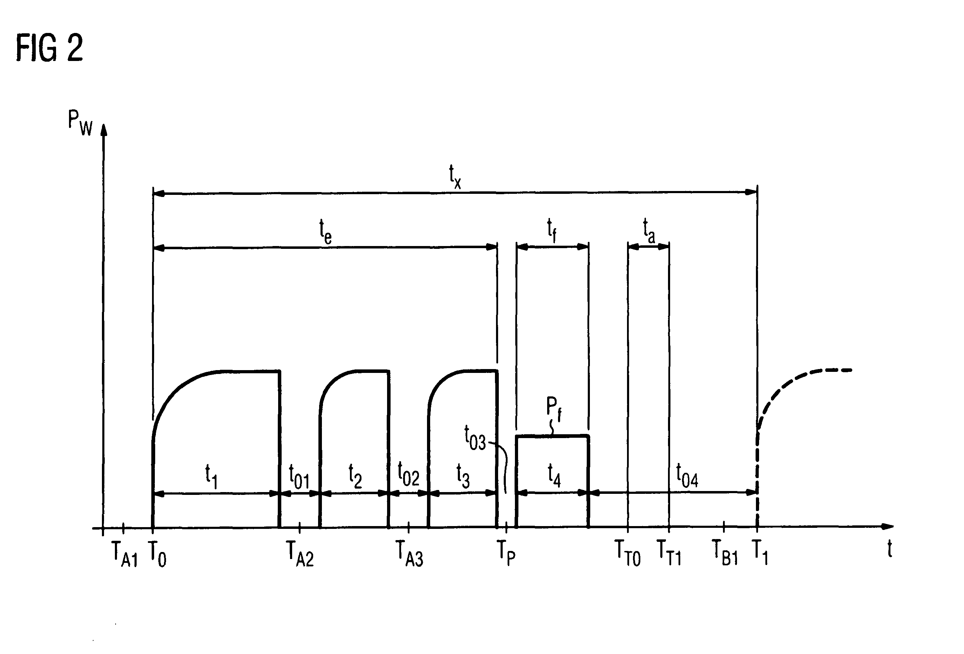

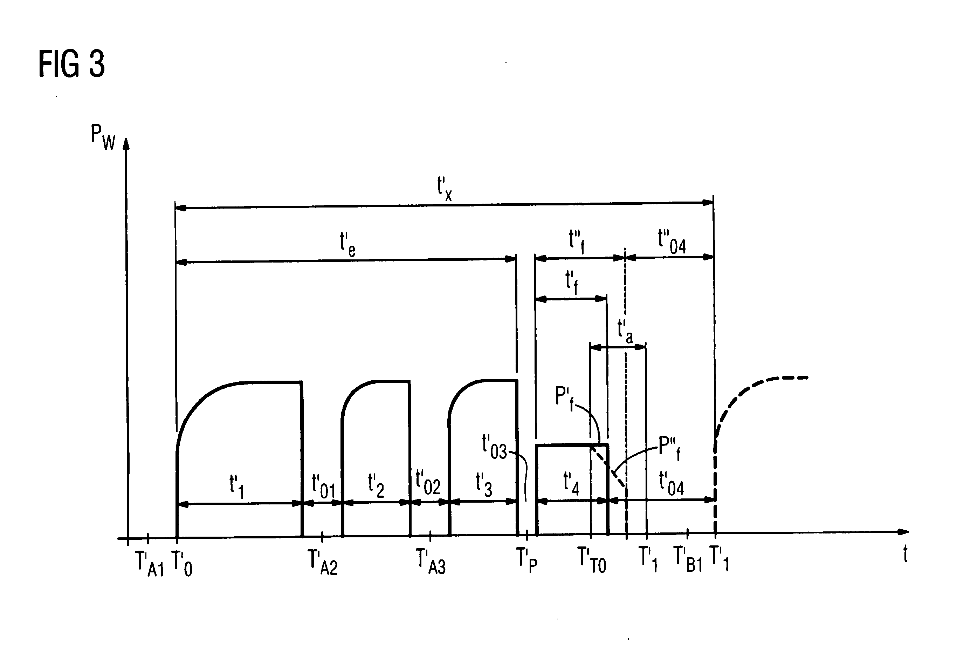

Die Figuren 2 und 3 zeigen schematisch und beispielhaft die Energieverteilung während des Betriebs eines Elektrolichtbogenofens 1. **Figur 2** bezieht sich dabei auf die herkömmliche Betriebsweise eines Elektrolichtbogenofens 1, **Figur 3** veranschaulicht demgegenüber die erfindungsgemäße Betriebsweise eines Elektrolichtbogenofens 1.

In den Figuren 2 und 3 ist jeweils die Wirkleistung P_{w} über der Zeit t aufgetragen. Beide Figuren 2 und 3 zeigen die Energieverteilung während eines vollständigen Betriebszyklus des Elektrolichtbogenofens 1 sowie lediglich angedeutet den Beginn eines zeitlich nachfolgenden Betriebszyklus. Der zeitlich vorangehende Betriebszyklus, der vollständig dargestellt ist, wird im Folgenden als erster Betriebszyklus bezeichnet; der zeitlich nachfolgende Betriebszyklus, dessen Anfang in den Figuren 2 und 3 lediglich angedeutet ist, wird im Folgenden als zweiter Betriebszyklus bezeichnet. In der Regel folgen beim Betrieb eines Elektrolichtbogenofens 1 mehrere - oft auch eine große Anzahl - Betriebszyklen aufeinander. Zwischen zwei Betriebszyklen können zusätzliche Stillstands-, Montage-und/oder Wartungszeiträume liegen, wobei man bestrebt ist, diese Zeiträume im Streben nach möglichst hoher Auslastung so gering wie möglich zu halten.

Zu den Zeitpunkten T_{A1}, T_{A2} und T_{A3} bzw. T'_{A1}, T'_{A2} und T'_{A3} werden während des ersten Betriebszyklus Einsatzstoffe in den Elektrolichtbogenofen 1 gegeben. Die Einsatzstoffe werden in der Regel mittels eines so genannten Korbes bei geöffnetem Deckel 5 in das Ofengefäß 11 gegeben.

Nach der Zugabe von Einsatzstoffen in den Elektrolichtbogenofen 1 wird den Elektroden 2 während den Einschaltzeiten t₁, t₂ und t₃ bzw. t'₁, t'₂ und t'₃ Energie zugeführt. Während der Einschaltzeiten t₁, t₂, t₃ bzw. t'₁, t'₂, t'₃ wird Schmelzgut 4 im Ofengefäß 11 geschmolzen und/oder in anderer Weise behandelt. An die Einschaltzeiten t₁, t₂, t₃ bzw. t'₁, t'₂, t'₃ schließen sich Abschaltzeiten t₀₁, t₀₂, t₀₃ bzw. t'₀₁, t'₀₂, t'₀₃ an, während derer keine Energie zugeführt wird.

Während einer letzten Einschaltzeit t₄ bzw. t'₄ muss sichergestellt werden, dass der Energiegehalt des Rohstahls 8 beim Abstich ausreichend hoch ist und für seine weitere Behandlung richtig eingestellt ist.

Während den Abschaltzeiten t₀₁, t₀₂ bzw. t'₀₁, t'₀₂ können z.B. wie bereits beschrieben Einsatzstoffe zugeführt werden. Zumindest in der Abschaltzeit t₀₃ bzw. t'₀₃, die der letzten Einschaltzeit t₄ bzw. t'₄ des ersten Betriebszyklus vorangeht, wird dem Schmelzgut 4 mindestens eine Probe zum Zeitpunkt T_{P} bzw. T'_{P} entnommen.

Die Zeitspanne vom Zeitpunkt T₀ bzw. T'₀, dem Beginn der ersten Einschaltzeit t₁ bzw. t'₁ des ersten Betriebszyklus bis zum Ende der vorletzten Einschaltzeit t₃ bzw. t'₃ eines Betriebszyklus wird als Einschmelzzeit tₑ bzw. t'ₑ bezeichnet. Die letzte Einschaltzeit t₄ bzw. t'₄ wird auch als Fertigmachzeit t_{f} bzw. t'_{f} oder t"_{f} bezeichnet.

Es ist wichtig, während der Fertigmachzeit t_{f}, t'_{f} oder t"_{f} den Energiegehalt des Schmelzgutes 4 bzw. des Rohstahls 8 richtig einzustellen. Während der Fertigmachzeit t_{f}, t'_{f} oder t"_{f} kann auch ein Frischen und/oder Feinen des Schmelzgutes 4 erfolgen.

An die letzte Einschaltzeit t₄ bzw. t`₄ des ersten Betriebszyklus, also an die Fertigmachzeit t_{f} bzw. t'_{f} oder t"_{f} des ersten Betriebszyklus schließt sich eine letzte Abschaltzeit t₀₄ bzw. t'₀₄ oder t"₀₄ an, die bis zum Zeitpunkt T₁ bzw. T'₁, dem Beginn der ersten Einschaltzeit des zweiten Betriebszyklus andauert. Die Zeitspanne vom Zeitpunkt T₀ bzw. T'₀, dem Beginn der ersten Einschaltzeit t₁ bzw. t'₁ des ersten Betriebszyklus bis zum Zeitpunkt T₁ bzw. T'₁, dem Beginn der ersten Einschaltzeit des zweiten Betriebszyklus, wird als Zykluszeit tₓ bzw. t'ₓ bezeichnet.

In herkömmlicher Betriebsweise eines Elektrolichtbogenofens 1 wird den Elektroden 2 während des Abstichverfahrensschritts keine Energie zugeführt (vgl. Fig. 2). In herkömmlicher Betriebsweise liegt die Abstichzeit tₐ, d.h. die Zeit vom Zeitpunkt T_{T0} dem Beginn des Abstichverfahrensschritts bis zum Zeitpunkt T_{T1}, dem Ende des Abstichverfahrensschritts, vollständig während der letzten Abschaltzeit t₀₄. Das Fertigmach-Energieniveau P_{f} liegt in der Regel deutlich unter dem durchschnittlichen Energieniveau während der Einschaltzeiten t₁, t₂ und t₃ während der Einschmelzzeit tₑ.

Erfindungsgemäß wird den Elektroden 2 des Elektrolichtbogenofens 1 wie in Figur 3 angedeutet während des Abstichverfahrensschritts, d.h. während der Abstichzeit t'ₐ, zumindest zeitweise Energie zugeführt. Der Abstichvorgang beginnt erfindungsgemäß im Vergleich zur herkömmlichen Betriebsweise eines Elektrolichtbogenofens 1 deutlich früher, was zu einem Zeitvorteil beim Betrieb des Elektrolichtbogenofens 1 führt. Die Zykluszeit t'ₓ beim erfindungsgemäßen Betrieb eines Elektrolichtbogenofens 1 wird so im Vergleich zur Zykluszeit tₓ beim herkömmlichen Betrieb verkürzt.

Erfindungsgemäß wird der Energieinhalt des sich im Elektrolichtbogenofen 1 befindlichen Schmelzguts 4 auch während des Abstichverfahrensschritts, d.h. während der Abstichzeit t'ₐ noch gezielt erhöht. Mit Hilfe einer Einschmelzsteuerung, die z.B. als Zählwerk ausgebildet sein kann und/oder unter Zuhilfenahme eines online den Prozess verfolgenden Modells zur Energie- und Massenbilanz wird zunächst der Energiezustand der Schmelze vor dem Zeitpunkt T'_{T0}, dem Beginn des Abstichverfahrensschritts, ermittelt und die Weiterveränderung des Energiegehalts des Schmelzguts 4 vorausberechnet. Mit Hilfe einer Einschmelzsteuerung und/oder eines Modells zur Energie-und Massenbilanz werden vorzugsweise auch der Zeitpunkt T'_{T0}, der Beginn des Abstichverfahrensschritts und der Zeitpunkt T'_{T1}, das Ende des Abstichverfahrensschritts, optimal vorausberechnet. Das Modell zur Energie- und Massenbilanz ist in einer Regelungsvorrichtung implementierbar. Vorzugsweise ist das Modell zur Energie- und Massenbilanz in der Regelungsvorrichtung implementiert, die die Elektrodenregelung für den Elektrolichtbogenofen 1 aufweist. Alternativ ist eine erste Regelungsvorrichtung vorhanden, die ein Modell zur Energie-und Massenbilanz aufweist, welche mit einer zweiten Regelungsvorrichtung gekoppelt ist, die die vorgenannte Elektrodenregelung aufweist. Die Betriebsweise des Elektrolichtbogenofens 1 kann alternativ oder zusätzlich durch einen Bediener beeinflusst werden.

Mit Hilfe des Modells zur Energie- und Massenbilanz wird ein etwaiges Durchschmelzen des Ofengefäßes 11 und/oder des Gefäß-Unterbaus 12 durch entsprechende Regelung der Energiezufuhr zu den Elektroden 2 verhindert. Das Energieniveau während der Fertigmachzeit t`_{f} bzw. t"_{f} kann während der Abstichzeit t'ₐ vorzugsweise stetig abgesenkt werden (vgl. Fertigmach-Energieniveau P"_{f}). Das Fertigmach-Energieniveau P'_{f} bzw. P"_{f} kann auch beispielsweise stufenförmig und/oder nach längerem zunächst konstanten Verlauf abgesenkt werden. Letztere Alternativen sind in Figur 3 jedoch nicht näher dargestellt. Das Energieniveau während der Fertigmachzeit t'_{f} bzw. t"_{f} kann während der Abstichzeit t'ₐ auch zumindest nahezu konstant gehalten werden (vergleiche Fertigmach-Energieniveau P' _{f}). Anhand der Fertigmachzeiten t'_{f} und t"_{f} und der Fertigmach-Energieniveaus P'_{f} und P"_{f} sind zwei Beispiele für einen erfindungsgemäßen Verlauf des Energieniveaus während der Abstichzeit t'ₐ schematisch dargestellt.

Sowohl in erfindungsgemäßer als auch in herkömmlicher Betriebsweise des Elektrolichtbogenofens 1 kann ein Betriebszyklus während seiner Einschmelzzeit tₑ bzw. t'ₑ ein oder mehrere Einschaltzeiten t₁, t₂, t₃ bzw. t'₁, t'₂, t'₃ aufweisen. Grundsätzlich ist es auch möglich, dass in einem Betriebszyklus der Fertigmachzeit t_{f} bzw. t'_{f} keine Einschmelzzeit tₑ bzw. t'ₑ vorausgeht. Nach der Abstichzeit tₐ bzw. t'ₐ werden dem Elektrolichtbogenofen 1 vor dem Zeitpunkt T₁ bzw. T'₁ zu einem Zeitpunkt T_{B1} bzw. T'_{B1} wieder Einsatzstoffe zugeführt.

Der für die Erfindung grundlegende Gedanke lässt sich im Wesentlichen wie folgt zusammenfassen:

Die Erfindung betrifft ein Verfahren zum Betrieb eines Elektrolichtbogenofens, der mindestens eine Elektrode aufweist mit einem Abstichverfahrensschritt. Indem zu Beginn des Abstichverfahrensschritts die Energiezufuhr über die mindestens eine Elektrode 2 des Elektrolichtbogenofens 1 nicht abgestellt wird und der mindestens einen Elektrode 2 auch während des Abstichverfahrensschritts noch Energie zugeführt wird, kann der Abstichverfahrensschritt früher als bei der herkömmlichen Betriebsweise eines Elektrolichtbogenofens 1 beginnen.

Dies führt zu einem wesentlichen Zeitvorteil, geringeren Elektroden- und Energieverbräuchen sowie einer höheren Produktivität. Durch Vorausberechnung der Veränderung des Energiegehalts des Schmelzguts 4 während des Abstichverfahrensschritts wird der gewünschte Energiegehalt des Rohstahls 8 sichergestellt und der Gefahr einer Überhitzung entgegengewirkt.

## Patentansprüche

1. Verfahren zum Betrieb eines Elektrolichtbogenofens (1), der mindestens eine Elektrode (2) aufweist, wobei in einem Betriebszyklus des Elektrolichtbogenofens (1), der eine Abfolge aus einer Einschaltzeit (t'₃), einer Abschaltzeit (t'₀₃) und einer letzten Einschaltzeit (t'_{f}, t"_{f}) umfasst, ein Abstichverfahrensschritt durchgeführt wird, wobei der mindestens einen Elektrode (2) während der Einschaltzeiten (t'₃, t'_{f}, t"_{f} ) Energie zugeführt und während der Abschaltzeit (t'₀₃) keine Energie zugeführt wird, wobei der Abstichverfahrensschritt nach der Abschaltzeit (t'₀₃) durchgeführt wird, und wobei der mindestens einen Elektrode (2) zumindest zeitweise auch während des Abstichverfahrensschritts Energie zugeführt wird.

2. Verfahren nach Anspruch 1, wobei der Energieinhalt eines sich im Elektrolichtbogenofen (1) befindenden Schmelzguts (4) auch während des Abstichverfahrensschritts gezielt erhöht wird.

3. Verfahren nach Anspruch 1 oder 2, wobei die Energiezufuhr durch Vorgaben eines Bedieners geregelt wird.

4. Verfahren nach Anspruch 1 oder 2, wobei die Energiezufuhr mittels eines Zählwerks geregelt wird.

5. Verfahren nach Anspruch 1 oder 2, wobei die Energiezufuhr unter Zuhilfenahme eines in einer Regelungsvorrichtung implementierten Modells zur Energie- und Massenbilanz geregelt wird.

6. Verfahren nach einem der vorhergehenden Ansprüche, wobei der Beginn des Abstichverfahrensschritts (T'_{T0}) in der letzten Einschaltzeit (t'_{f}, t"_{f}) und das Ende des Abstichverfahrensschritts (T'_{T1}) in einer auf die letzte Einschaltzeit (t'_{f}, t''_{f}) folgenden letzten Abschaltzeit (t'₀₄, t''₀₄) liegt.

7. Verfahren nach Anspruch 6, wobei die Energiezufuhr in der letzten Einschaltzeit (t''_{f}) während des Abstichverfahreneschritts stetig abgesenkt wird.

8. Verfahren nach Anspruch 6, wobei die Energiezufuhr in der letzten Einschaltzeit (t'_{f}, t"_{f}) stufenförmig und/oder nach längerem zunächst konstanten Verlauf abgesenkt wird.

9. Vorrichtung zur Durchführung eines Verfahrens nach einem der Ansprüche 5 bis 8, soweit auf Anspruch 5 rückbezogen, mit einem Elektrolichtbogenofen (1) und einer mit dem Elektrolichtbogenofen (1) gekoppelten Regelungsvorrichtung, wobei die Regelungsvorrichtung ein Modell zur Energie- und Massenbilanz aufweist und derart ausgebildet ist, dass sie die Position und Energiezufuhr der mindestens einen Elektrode (2) auch während des Abstichverfahrensschritts regelt.

## Claims

1. Method for operating an electric arc furnace (1) comprising at least one electrode (2), with a tapping method step being performed in an operating cycle of the electric arc furnace (1) comprising a sequence of a power-on period (t'₃), a power-off period (t'₀₃) and a last power-on period (t'_{f}, t"_{f}), with energy being supplied to the at least one electrode (2) during the power-on periods (t'₃, t'_{f}, t"_{f}) and no energy being supplied during the power-off period (t'₀₃), with the tapping method step being performed after the power-off period (t'₀₃), and with energy being supplied to the at least one electrode (2) at least for part of the time even during the tapping method step.

2. Method according to Claim 1, wherein the energy content of a melt (4) in the electric arc furnace (1) is selectively increased even during the tapping method step.

3. Method according to Claim 1 or 2, wherein the energy supply is controlled by means of inputs by an operator.

4. Method according to Claim 1 or 2, wherein the energy supply is controlled by means of a meter.

5. Method according to Claim 1 or 2, wherein the energy supply is controlled by means of a model for the energy and mass balance implemented in a control device.

6. Method according to one of the preceding claims, wherein the beginning of the tapping method step (T'_{T0}) lies in the last power-on period (t'_{f}, t"_{f}) and the end of the tapping method step (T'_{T1}) lies in a final power-off period (t'₀₄, t"₀₄) following the last power-on period (t'_{f}, t"_{f}).

7. Method according to Claim 6, wherein the energy supply in the last power-on period (t"_{f}) is steadily decreased during the tapping method step.

8. Method according to Claim 6, wherein the energy supply in the last power-on period (t'_{f}, t"_{f}) is decreased in steps and/or according to a prolonged, initially constant curve.

9. Device for performing a method according to one of Claims 5 to 8, insofar referred to Claim 5, with an electric arc furnace (1) and a control device connected to the electric arc furnace (1), wherein the control device comprises a model for the energy and mass balance and is configured in such a way that it controls the position and the energy supply to the at least one electrode (2) even during the tapping method step.

## Revendications

1. Procédé pour faire fonctionner un four (1) à arc électrique, qui a au moins une électrode (2), dans lequel on effectue un stade de coulée dans un cycle de fonctionnement du four (1) à arc électrique, qui comprend une succession d'un temps (t'₃) de mise en route, un temps (t'₀₃) d'arrêt et un dernier temps (t'_{f}, t"_{f}) de mise en route, dans lequel on envoie de l'énergie à la au moins une électrode (2) pendant les temps (t'₃, t'_{f}, t"_{f}) de mise en route et on n'envoie pas d'énergie pendant le temps (t'₀₃) d'arrêt, le stade de coulée étant effectué après le temps (t' ₀₃) d' arrêt et dans lequel on envoie de l'énergie à la au moins une électrode (2) au moins de temps à autre également pendant le stade de coulée.

2. Procédé suivant la revendication 1, dans lequel on augmente le contenu énergétique d'un produit fondu (4) se trouvant dans le four (1) à arc électrique également pendant le stade de coulée.

3. Procédé suivant la revendication 1 ou 2, dans lequel on régule l'apport d'énergie par des prescriptions d'un opérateur.

4. Procédé suivant la revendication 1 ou 2, dans lequel on régule l'apport d'énergie au moyen d'un compteur.

5. Procédé suivant la revendication 1 ou 2, dans lequel on régule l'apport d'énergie en s'aidant d'un modèle de bilant énergétique et massique mis en oeuvre dans un dispositif de régulation.

6. Procédé suivant l'une des revendications précédentes, dans lequel le début du stade (T'_{T0}) de coulée se trouve dans le dernier temps (t'_{f}, t"_{f}) de mise en route et la fin du stade (T'_{T1}) de coulée dans un dernier temps (t' ₀₄, t"₀₄) d'arrêt suivant le dernier temps (t'_{f}, t"_{f}) de mise en route.

7. Procédé suivant la revendication 6, dans lequel on abaisse constamment l'apport d'énergie dans le dernier temps (t"_{f}) de mise en route pendant le stade de coulée.

8. Procédé suivant la revendication 6, dans lequel on abaisse l'apport d'énergie dans le dernier stade (t'_{f}, t"_{f}) de mise en route par palier et/ou suivant une longue courbe d'abord constante.

9. Dispositif pour la mise en oeuvre d'un procédé suivant l'une des revendications 5 à 8, dans la mesure où elle se rattache à la revendication 5, comprenant un four (1) à arc électrique et un dispositif de régulation couplé au four (1) à arc électrique, le dispositif de régulation ayant un modèle de bilan énergétique et massique et étant tel qu'il régule la position et l'apport d'énergie à la au moins une électrode également par le stade de coulée.
